# EUROPÄISCHE PATENTANMELDUNG

(11) **EP 4 064 163 A1**
(43) Veröffentlichungstag der Anmeldung: **28.09.2022**
(21) Anmeldenummer: 22163549.3
(22) Anmeldetag: 22.03.2022
(51) Int. Cl.: G06Q 30/00, G06Q 50/10, G06Q 30/06

(54) **SCHMUCKAUSWAHL/-KONFIGURATIONSVERFAHREN**

(30) Priorität: 26.03.2021 DE 102021107664
(71) Anmelder: egf - Eduard G.Fidel GmbH, 75179 Pforzheim (DE)
(72) Erfinder: BINDER, Kai-F., 75173 Pforzheim (DE); SCHIFFER, Stefan, 75180 Pforzheim (DE)
(74) Vertreter: Wacker, Jost Oliver

(57) **Zusammenfassung**

Verfahren zur Schmuckauswahl und -konfiguration, insbesondere zur Auswahl und Konfiguration von Trau- beziehungsweise Paarringen aus einem Onlineangebot (12), bei dem in einem ersten Schritt (S1) Ansichten (16) einer Mehrzahl von Schmuckstückmodellen (10) des Onlineangebots (12), die an einer EDV-Einheit (4) hinterlegt sind, an einem über ein Netzwerk (N) mit der EDV-Einheit (4) verbundenen Benutzerendgerät (6) in Abhängigkeit von detektierten Durchsichtsteuerungseingaben eines Benutzers (B) einzeln oder in Gruppen nacheinander angezeigt werden und durch eine Auswahlsteuerungseingabe des Benutzers (B) auswählbar sind, in einem zweiten Schritt (S2) nach erfolgter Auswahlsteuerungseingabe eine Konfigurationsabfrage gestartet wird, bei der in Abhängigkeit des ausgewählten Schmuckstückmodells (10) auswählbare Varianten (18) und/oder optionale Ausstattungsmerkmale (20) ausgegeben werden und durch wenigstens eine Konfigurationseingabe auswählbar sind, und in einem dritten Schritt (S3) nach Abschluss der Konfigurationsabfrage wenigstens eine Abschlussoption zur Einleitung eines Bestellvorganges ausgegeben wird. Dabei ist vorgesehen, dass im ersten Schritt (S1) für die angezeigten Schmuckstückmodelle (10) des Onlineangebots (12) jeweils zwei unterschiedliche Eingabeoptionen (30, 32) für die Durchsichtsteuerungseingabe angezeigt werden, wobei hinsichtlich des jeweils aktuell angezeigten Schmuckstückmodells (10) eine erste Eingabeoption (30) einer positiven Wertung entspricht und eine zweite Eingabeoption (32) einer negativen Wertung entspricht, und nach einer vorbestimmten Anzahl an erfolgten Durchsichtsteuerungseingaben durch den Benutzer (B) in Abhängigkeit von dessen Wertung der angezeigten Schmuckstückmodelle (10a,b,...n) eine Vorauswahl (38) an mehreren Schmuckstückmodellen (10a,b,...n) ermittelt und angezeigt wird, von denen wenigstens eines durch die Auswahlsteuerungseingabe des Benutzers (B) für die Konfigurationsabfrage auswählbar ist.

## Beschreibung

Die Erfindung betrifft ein Verfahren zur Auswahl und Konfiguration von Schmuck nach dem Oberbegriff des Anspruchs 1 sowie ein Computerprogrammprodukt und ein Schmuckauswahlsystem zur Durchführung des Verfahrens. Das Schmuckauswahl/- konfigurationsverfahren dient dabei insbesondere zur Auswahl und Konfiguration von Trau- beziehungsweise Paarringen aus einem online präsentierten beziehungsweise abrufbaren Angebot beispielsweise eines Online-Katalogs, eines Online-Konfigurators oder eines Online-Shops. Bei diesem Auswahl-/Konfigurationsverfahren werden in einem ersten Schritt Ansichten einer Vielzahl von Schmuckstückmodellen eines Onlineangebots, die an einer EDV-Einheit, wie einem physischen oder virtuellen Server beziehungsweise einem Cloudspeicher hinterlegt sind, an einem Benutzerendgerät angezeigt. Die Schmuckstückmodelle des Onlineangebots können hierbei sowohl durch Einzelschmuckstücke, wie insbesondere Schmuckringe, als auch durch Schmuckstückpaare gebildet sein, wie insbesondere durch Trauring-, Verlobungs- oder Freundschaftsringpaare. Das Benutzerendgerät ist hierzu über das Internet bidirektional mit der EDV-Einheit verbunden, wobei die Ansichten der Schmuckstückmodelle des Onlineangebots in Abhängigkeit von detektierten Durchsichtsteuerungseingaben eines Benutzers, wie insbesondere Scroll-, Wisch-, Maus- oder Tastatureingaben einzeln oder in Gruppen nacheinander angezeigt beziehungsweise durchgeblättert werden können. Durch eine Auswahlsteuerungseingabe des Benutzers, wie beispielsweise durch Setzen einer virtuellen Markierung oder durch Drücken eines virtuellen Bestätigungsbuttons, können die angezeigten Schmuckstückmodelle dabei jeweils durch eine Auswahlsteuerungseingabe ausgewählt werden.

Nachdem eine solche Auswahlsteuerungseingabe erfolgt ist, wird dann in einem zweiten Schritt eine Konfigurationsabfrage gestartet, bei der in Abhängigkeit des jeweils ausgewählten Schmuckstückmodells auswählbare Varianten und/oder optionale Ausstattungsmerkmale, wie beispielsweise hinsichtlich Ringgröße, -farbe, -breite und/oder Steinbesatz ausgegeben beziehungsweise abgefragt werden. Die Auswahl kann dabei durch wenigstens eine Konfigurationseingabe erfolgen, die beispielsweise durch Markieren oder Auswählen textlich oder bildlich angezeigter Varianten und/oder durch eine textliche Eingabe in eine hierfür vorgesehene Eingabemaske ausgeführt werden kann.

Nach Beendigung der Konfigurationsabfrage wird dann in einem dritten Schritt wenigstens eine Abschlussoption ausgegeben, die beispielsweise die Anzeige eines Bestellbuttons für die Verknüpfung mit bereits hinterlegten Bestelldaten des Benutzers oder eine Eingabemaske für die Erfassung der Bestelldaten des Benutzers umfasst. Mittels der Erfassung oder Verknüpfung der für die Bestellung benötigten Bestelldaten des Benutzers kann daraufhin der Bestellvorgang hinsichtlich des ausgewählten und konfigurierten Schmuckstückmodells eingeleitet werden. Alternativ oder zusätzlich hierzu kann die ausgegebene Abschlussoption dem Benutzer auch die Kontaktaufnahme mit einem Fachverkäufe, wie beispielsweise eines Juweliergeschäftes, ermöglichen beziehungsweise anbieten oder den Benutzer an eine entsprechende Bestellseite eines Online-Shops weiterleiten. Als weitere Abschlussoption kann ferner auch die Speicherung der getroffenen Auswahl beziehungsweise Konfiguration vorgesehen werden, beispielsweise um die entsprechenden Daten für eine spätere Bestellung zu sichern.

Derartige Auswahl-/Konfigurationsverfahren für Schmuck werden heute von vielen Onlineangeboten verwendet, wie beispielsweise von dem unter https://www.123gold.de/konfigurator/ aufrufbaren Online-Konfigurator. Je größer die Auswahl an Schmuckstückmodellen eines solchen Onlineangebots ist, desto langwieriger und schwieriger ist es dabei für den jeweiligen Benutzer, sich einen Überblick zu verschaffen und die gewünschten beziehungsweise die den jeweiligen Wünschen am nächsten kommenden Schmuckmodelle zu finden.

Die Aufgabe der Erfindung ist es, bei einem gattungsgemäßen Auswahl-/Konfigurationsverfahren die genannten Nachteile zu vermeiden und dem Benutzer auch bei einem umfangreichen Onlineangebot an Schmuckstückmodellen die Auswahl, Konfiguration und Bestellung eines geeigneten Exemplars zu beschleunigen und zu vereinfachen und insbesondere ein zahlenmäßig reduziertes und auf den jeweiligen Benutzer zugeschnittenes Angebot an Schmuckstückmodellen auszugeben.

Diese Aufgabe wird durch ein Auswahl-/Konfigurationsverfahren mit den Merkmalen des Anspruchs 1 gelöst. Dabei werden für die im ersten Schritt angezeigten Schmuckstückmodelle des Onlineangebots jeweils zwei unterschiedliche Eingabeoptionen für die Durchsichtsteuerungseingabe angezeigt. Eine erste Eingabeoption entspricht dabei einer positiven Wertung und eine von der ersten Eingabeoption abweichende zweite Eingabeoption entspricht einer negativen Wertung des jeweils aktuell angezeigten Schmuckstückmodells. Nach einer vorbestimmten Anzahl an erfolgten Durchsichtsteuerungseingaben durch den Benutzer wird dann, in Abhängigkeit von den eingegebenen Wertungen hinsichtlich der bis dahin angezeigten Schmuckstückmodelle, eine Vorauswahl an mehreren Schmuckstückmodellen ermittelt und angezeigt, deren Umfang gegenüber dem gesamten Onlineangebot deutlich reduziert ist. Von den bei dieser Vorauswahl angezeigten Schmuckstückmodellen kann der Benutzer dann wenigstens eines durch die Auswahlsteuerungseingabe für die weitere Konfigurationsabfrage auswählen. Auf diese Weise kann das gesamte zur Verfügung stehende Onlineangebot an Schmuckstückmodellen, in Abhängigkeit der vom jeweiligen Benutzer bei einer begrenzten Anzahl von Durchsichtsteuerungseingaben getroffenen individuellen Wertung, auf eine deutlich reduzierte Vorauswahl reduziert werden, die individuell auf ihn zugeschnitten ist. Die Anzeige der beiden unterschiedlichen Eingabeoptionen im ersten Schritt erfolgt hierbei durch zwei virtuelle Bedienfelder, die an einem insbesondere berührungsempfindlichen Bildschirm des Benutzerendgerätes generiert werden. Die virtuellen Bedienfelder sind dabei beispielsweise an unterschiedlichen Positionen und/oder in unterschiedlicher Richtung zu betätigen und derart gekennzeichnet, dass für einen Benutzer erkennbar ist, durch welches der Bedienfelder eine positive und durch welches eine negative Wertung generierbar ist. Bei einer seinem Wertungswunsch entsprechenden Durchsichtssteuerungseingabe erkennt eine Sensorik des Bildschirms, welches der Bedienfelder betätigt wurde oder in welche Richtung eine Wischeingabe erfolgte und sendet ein Signal mit einer der gewünschten Wertung entsprechenden Information an ein Vorauswahlprogrammteil. Dieses generiert nach einer vorbestimmten Anzahl an Durchsichtssteuerungseingaben anhand der signalisierten Wertungen und in Abhängigkeit gespeicherter Auswahlkriterien beziehungsweise anhand eines gespeicherten Auswahlalgorithmus die Vorauswahl an hinterlegten Schmuckstückmodellen. Zu dieser Vorauswahl werden dann entsprechende hinterlegte Bilddaten aufgerufen und am Bildschirm ausgegeben. Diese am Bildschirm wiedergegebenen vorausgewählten Schmuckstückmodelle sind somit auf den Benutzer beziehungsweise dessen Wertungen zugeschnitten und deren Anzahl gegenüber der Zahl der Schmuckstückmodelle des Gesamtangebotes reduziert. Dadurch können dem Benutzer sehr viel schneller die für ihn relevanten Schmuckstückmodelle angezeigt werden, wodurch sich für ihn der Zeitaufwand für die Durchsicht der für ihn relevanten Schmuckstückmodelle und damit gegebenenfalls auch für Konfiguration und Bestellung eines Schmuckstückmodells deutlich verringert.

In einer besonders vorteilhaften Ausführungsform entspricht die erste Eingabeoption einer Wischgesteneingabe in eine erste Richtung und die zweite Eingabeoption einer Wischgesteneingabe in eine zur ersten Richtung entgegengesetzten zweiten Richtung. Hierdurch ist eine besonders einfache und schnelle Ausführung der vorbestimmten Anzahl an Durchsichtsteuerungseingaben im ersten Schritt beziehungsweise ein schnelles und einfaches Durchblättern der hierbei angezeigten, vorausgewählten Schmuckstückmodelle bei gleichzeitiger Wertung möglich. Zudem können die in entgegengesetzter Richtung erfolgenden Wischeingaben besonders einfach von der Sensorik des Bildschirms erfasst werden, wodurch die Durchsichtssteuerungseingaben zuverlässig der gewünschten Wertung zugeordnet und an das Vorauswahlprogrammteil signalisiert werden können.

Dabei ist es günstig, wenn die Schmuckstückmodelle, die im ersten Schritt angezeigt werden, in einer vorgegebenen Reihenfolge aus der in der EDV-Einheit hinterlegten Vielzahl von Schmuckstückmodellen des Onlineangebots ausgewählt werden. So können beispielsweise zunächst Schmuckstückmodelle mit unterschiedlichen Breiten angezeigt werden, mit deren Hilfe somit vorrangig die gewünschte Breite ermittelt werden kann. Die hiernach angezeigten Schmuckstückmodelle können dann beispielsweise unterschiedliche Farben aufweisen beziehungsweise aus unterschiedlichen Materialien hergestellt sein, um eine gewünschte Farbe zu ermitteln. Hierauf können dann weitere Schmuckstückmodelle angezeigt werden, die beispielsweise untereinander einen unterschiedlichen Steinbesatz aufweisen, um wiederum den gewünschten Steinbesatz ermitteln zu können. Auf diese Weise können mit einer begrenzten Zahl von angezeigten Schmuckstückmodellen, die vom jeweiligen Benutzer bevorzugten, wesentlichen Vorauswahlkriterien ermittelt werden. Anhand des Ergebnisses kann dann die gegenüber dem gesamten Onlineangebot deutlich, das heißt insbesondere auf einen Bruchteil reduzierte Vorauswahl von in Frage kommenden Schmuckstückmodellen ermittelt und angezeigt werden, die der Benutzer in relativ kurzer Zeit durchblättern kann. Durch die Auswahlsteuerungseingabe kann der Benutzer dann aus dieser auf ihn individuell zugeschnittenen Vorauswahl eines der Schmuckstückmodelle auswählen, um hierzu die Konfigurationsabfrage des zweiten Verfahrensschrittes zu starten.

Vorteilhafterweise wird hierbei im ersten Schritt die Vorauswahl nach einer Wertungsabfrage von maximal 25, bevorzugterweise maximal zehn, Durchsichtsteuerungseingaben ermittelt und ausgegeben, um eine schnelle Ermittlung und Ausgabe der individuell auf den Benutzer zugeschnittenen Vorauswahl an Schmuckstückmodellen zu gewährleisten.

Dabei ist es günstig, wenn die Vorauswahl in Abhängigkeit davon ermittelt und ausgegeben wird, dass von den detektierten Durchsichtsteuerungseingaben wenigstens eine einer positiven Wertung entspricht. Durch die wenigstens eine positive Wertung kann dabei die Wahrscheinlichkeit erhöht werden, dass auch die ermittelte und ausgegebene Vorauswahl an Schmuckstückmodellen, wenigstens teilweise den Wünschen des Benutzers entspricht. Sollte dagegen keine der, beispielsweise auf 25, vorzugsweise zehn, begrenzten Durchsichtsteuerungseingaben eine positive Wertung erhalten, kann entweder die laufende Wertungsabfrage durch die Anzeige weiterer Schmuckstückmodelle aus dem Onlineangebot erweitert werden, die Wertungsabfrage wiederholt oder eine komplett neue Wertungsabfrage mit neuen Schmuckstückmodellen angezeigt werden. Zusätzlich hierzu kann in allen Fällen zudem ein Hinweis dahingehend angezeigt werden, dass für die Ermittlung beziehungsweise Ausgabe der Vorauswahl wenigstens eine positive Wertung erforderlich ist beziehungsweise das mit den bisherigen Durchsichtsteuerungseingaben keine Vorauswahl ermittelt werden kann.

Ferner ist es von Vorteil, wenn die Vorauswahl maximal acht Schmuckstückmodelle umfasst, um nach der Erstellung und Ausgabe der auf den Benutzer individuell zugeschnittenen Vorauswahl eine schnelle Durchsicht und endgültige Auswahl eines den Wünschen des Benutzers entsprechenden Schmuckstückmodells zu gewährleisten.

Ferner ist es günstig, wenn die Vorauswahl in Abhängigkeit von Merkmalen der im ersten Schritt angezeigten und bewerteten Schmuckstückmodelle des Onlineangebots ermittelt wird, die wenigstens Farbe, Breite und Steinbesatz umfassen beziehungsweise berücksichtigen. Auf diese Weise ist sichergestellt, dass bei der auf den Benutzer individuell zugeschnittenen Vorauswahl in jedem Fall die wichtigsten Vorauswahlkriterien des Schmuckstückmodells berücksichtigt werden.

In einer weiteren vorteilhaften Ausführungsform wird die Vorauswahl in Abhängigkeit von Informationen über das verwendete Benutzerendgerät und eine daraus abgeleitete Preisspanne ermittelt. Derartige Informationen können dabei beispielsweise anhand der IP-Adresse des Endgerätes und/oder anhand des vom Webbrowser des Endgerätes an den Server übertragenen User-Agents ermittelt werden. Die Informationen können dabei beispielsweise auf dem Internetprovider des Endgerätes, auf einer Region, in der sich das Endgerät befindet, und/oder auf der Art beziehungsweise dem Hersteller des Endgerätes basieren. In Abhängigkeit von diesen Informationen wird dann abgeschätzt, für welche Preisspanne sich der jeweilige Benutzer voraussichtlich interessiert. Dabei wird beispielsweise im Falle eines hochpreisigen Internetproviders, einer relativ teuren Wohngegend oder eines hochpreisigen Endgerätes eine höhere Preisspanne ausgewählt als im Falle eines niedrigpreisigen Internetproviders, einer günstigen Wohngegend oder eines preiswerten Endgerätes.

Ferner ist es günstig, wenn die Vorauswahl in Abhängigkeit von Reaktionszeiten des Benutzers bei den detektierten Durchsichtsteuerungseingaben ermittelt wird. Hierbei kann beispielsweise eine relativ schnell getroffene Durchsichtsteuerungseingabe bei der Erstellung der Vorauswahl höher gewichtet werden als eine eher verzögerte Durchsichtsteuerungseingabe.

Besonders vorteilhaft ist hierbei, wenn die Vorauswahlkriterien in Abhängigkeit derer die Vorauswahl ermittelt wird, eine veränderbare Wichtung aufweisen und mittels künstlicher Intelligenz einstellbar sind. Auf diese Weise kann die Wichtung der Vorauswahlkriterien, in Abhängigkeit von denen die Vorauswahl ermittelt wird, wiederum in Abhängigkeit davon angepasst beziehungsweise verändert werden, wie viele Bestellungsvorgänge über alle bereits durchgeführten Auswahl-/Konfigurationsverfahren hinweg generiert werden konnten oder nicht. Hierdurch kann die Vorauswahl fortschreitend optimiert werden.

Ferner ist es günstig, wenn im dritten Schritt die wenigstens eine Abschlussoption durch Öffnen einer Onlineangebots-Website, wie insbesondere einer Onlineshop-Website, zur Verfügung gestellt wird, wodurch die bereits für den Online-Shop hinterlegten Programmierungen oder Daten auch für die Bestellung eines aus der individuell zugeschnittenen Vorauswahl ausgewählten Schmuckstückmodells genutzt werden können.

Ferner wird die oben genannte Aufgabe durch ein Computerprogrammprodukt gelöst, das zum Aufbau einer bidirektionalen Verbindung zwischen der EDV-Einheit und dem Benutzerendgerät sowie zur Durchführung des Verfahrens in einer der oben beschriebenen Ausführungsformen dient und das hierzu auf der EDV-Einheit gespeichert und ausführbar ist. Dabei ist ein Vorauswahl-Programmteil zur Ermittlung und zur Ausgabe der Vorauswahl der Schmuckstückmodelle vorgesehen, das vom Benutzer aus einer Onlineangebots-Website heraus aktiviert werden kann, wie insbesondere der Website eines Online-Katalogs, eines Online-Konfigurators oder eines Onlineshops. Auf diese Weise kann ein Benutzer beziehungsweise Kunde des Onlineshops das VorauswahlProgrammteil bedarfsweise aktivieren, um eine individuell auf Ihn zugeschnittene Vorauswahl von Schmuckstückmodellen zu generieren und dadurch die Suche nach einem passenden Schmuckstückmodell zu vereinfachen beziehungsweise zeitlich zu verkürzen. Insbesondere kann es der Benutzer dadurch vermeiden, das gesamte Angebot beziehungsweise einen großen Teil des Gesamtangebots des Onlineshops an Schmuckstückmodellen durchzublättern, um ein favorisiertes Schmuckstückmodell zu finden.

Dabei ist es besonders vorteilhaft, wenn für die Aktivierung des Vorauswahlprogrammteils aus dem Onlineshop heraus, eine in diesem permanent angezeigte, virtuelle Schaltfläche programmiert ist. Hierdurch kann der Benutzer beim Besuch der Onlineangebots-Website bei Bedarf jederzeit und besonders einfach vom Onlineangebots-Programmteil in das Vorauswahlprogrammteil wechseln, um hierin mittels einer begrenzten Anzahl von Durchsichtsteuerungseingaben die individuell auf ihn zugeschnittene Vorauswahl an in Frage kommenden Schmuckstückmodellen ermitteln und anzeigen lassen zu können.

Vorteilhafterweise ist dabei ein Onlineangebots-Programmteil vorgesehen, über das der Bestellvorgang eingeleitet werden kann. Auf diese Weise kann auch bei Erstellung einer Vorauswahl der Onlineshop zur abschließenden Bestellung eines ausgewählten Schmuckstückmodells verwendet werden. Für die Bestellung aus einer Vorauswahl heraus muss somit keine separate Software verwendet werden. Zudem können gegebenenfalls bereits für den Onlineshop hinterlegte Daten auch für die Bestellung aus der Vorauswahl heraus genutzt werden.

Vorzugsweise können dabei alle Ansichten und auswählbaren Varianten und/oder optionale Ausstattungsmerkmale der Schmuckstückmodelle über den Onlineangebots-Programmteil an der EDV-Einheit hinterlegt und vom Vorauswahl-Programmteil abgerufen werden. Auf diese Weise können die für den Onlineshop verwendeten Daten auch für das Vorauswahlprogrammteil genutzt werden, wodurch insbesondere keine zusätzliche Speicherung der für die Vorauswahl verwendeten Ansichten notwendig ist.

Bevorzugterweise ist zudem ein KI-Programmteil vorgesehen, mittels dem auf Basis früher angezeigter Vorauswahlen und in Abhängigkeit der für diese Vorauswahlen eingeleiteten oder nicht eingeleiteten Bestellungen, die Wichtung der Vorauswahlkriterien veränderbar ist, in Abhängigkeit derer zukünftige Vorauswahlen ermittelt werden. Auf diese Weise kann die vom Vorauswahl-Programmteil ermittelte und ausgegebene Vorauswahl mittels des KI-Programmteils permanent weiterentwickelt beziehungsweise verbessert werden. Dabei können vom KI-Programmteil hinsichtlich der Vorauswahl wiederkehrend Änderungen vorgenommen werden, deren Wirkung anhand des nachfolgenden Abschlusses oder nicht Abschlusses einer Bestellung durch die Benutzer eine Art Bewertung erfährt. Auf diese Weise kann das KI-Programmteil trainiert werden, um das Vorauswahl-Programmteil fortlaufend zu optimieren.

Darüber hinaus wird die oben genannten Aufgabe durch ein Schmuckauswahlsystem zur Durchführung des Verfahrens in einer der oben beschriebenen Ausführungsformen gelöst, das hierzu eine EDV-Einheit und ein mit dieser bidirektional verbindbares Benutzerendgerät aufweist, wobei das Benutzerendgerät einen berührungsempfindlichen Bildschirm aufweist, an dem die Wischgesteneingabe detektierbar ist. Mithilfe eines derartigen Schmuckauswahlsystem kann das Auswahl-/Konfigurationsverfahren besonders einfach mittels Durchsichtsteuerungseingabe an einem Touchscreen und insbesondere auch an einem mobilen Gerät, wie einem Smartphone oder einem Tabletcomputer durchgeführt werden. Alternativ oder zusätzlich hierzu ist jedoch auch eine Durchsichtsteuerungseingabe per Computermouse oder Tastatur möglich.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: ein erfindungsgemäßes Schmuckauswahlsystem,
- Figur 2: ein Ablaufdiagramm eines erfindungsgemäßen Schmuckkonfigurationsverfahren,
- Figur 3: ein Benutzerendgerät des Schmuckkonfigurationssystems mit einer daran angezeigten Ansicht eines Schmuckstückmodells und zwei Eingabeoptionen,
- Figur 4: das Benutzerendgerät mit einer daran angezeigten Vorauswahl an Schmuckstückmodellen,
- Figur 5: das Benutzerendgerät mit einer daran angezeigten Konfigurationsabfrage und
- Figur 6: das Benutzerendgerät mit einer daran angezeigten Abschlussoption.

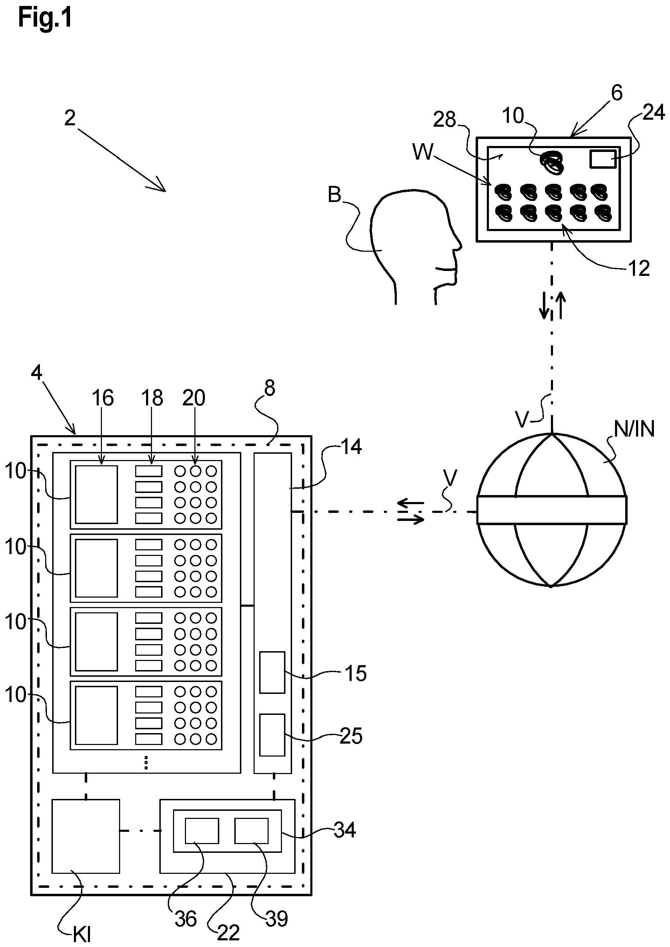

Fig. 1 zeigt ein Schmuckauswahlsystem 2 mit einer EDV-Einheit 4, die über ein Netzwerk N mit einem Benutzerendgerät 6 bidirektional verbindbar ist. Das Netzwerk N, über das hierbei die bidirektionale Verbindung V aufgebaut werden kann, ist dabei vorzugsweise durch das Internet IN gebildet. Alternativ hierzu kann das Netzwerk N jedoch auch durch ein nicht öffentliches beziehungsweise internes Netzwerk, wie beispielsweise eines Schmuckanbieters, gebildet sein.

Die EDV-Einheit 4 ist in Figur 1 beispielhaft als physischer Server dargestellt. Alternativ oder zusätzlich hierzu kann die EDV-Einheit 4 jedoch auch durch einen cloudbasierten Server gebildet sein. In jedem Fall ist auf der EDV-Einheit 4 ein Computerprogrammprodukt 8 gespeichert und ausführbar. Dieses Computerprogrammprodukt 8 dient zum Aufbau der bidirektionalen Verbindung V mit dem Benutzerendgerät 6 sowie zur Durchführung eines Verfahrens zur Auswahl und Konfiguration eines Schmuckstückmodells 10 aus einem Onlineangebot 12 mit einer Vielzahl von unterschiedlichen Schmuckstückmodellen 10, wie beispielsweise eines Online-Katalogs, eines Online-Konfigurators oder eines Online-Shops, die über das Benutzerendgerät 6 angezeigt werden können. Die Schmuckstückmodelle 10 können hierbei sowohl durch ein Einzelschmuckstück, wie insbesondere einen Schmuckring, als auch durch ein Schmuckstückpaar gebildet sein, wie insbesondere durch ein Trauring-, Verlobungs- oder Freundschaftsringpaar.

Das Computerprogrammprodukt 8 weist hierzu beispielhaft ein Onlineangebots-Programmteil 14 auf, über das die Schmuckstückmodelle 10 des Onlineangebots 12 an der EDV-Einheit 4 hinterlegt und zur Anzeige in einer am Benutzerendgerät 6 wiedergegebenen Onlineangebots-Website W abgerufen werden können. Zudem ist ein Abschluss-Programmteil 15 vorgesehen, das in den Onlineangebots-Programmteil 14 integriert oder als eigenständiger Programmteil des Computerprogrammproduktes 8 vorgesehen ist und beispielsweise als Programmteil zur Durchführung einer Bestellung ausgebildet ist. Zu jedem der Schmuckstückmodelle 10 ist dabei wenigstens eine Ansicht 16, wenigstens eine Variante 18, insbesondere hinsichtlich der Größe, des Designs oder der Breite, sowie wenigstens ein auswählbares Ausstattungsmerkmal 20, wie beispielsweise hinsichtlich eines verwendeten Materials oder eines Steinbesatzes, hinterlegt.

Darüber hinaus weist das Computerprogrammprodukt 8 ein Vorauswahl-Programmteil 22 auf, das über eine virtuelle Schaltfläche 24 der Onlineangebots-Website W beziehungsweise über das Benutzerendgerät 6 aktiviert werden kann. Zudem ist ein Konfigurationsprogrammteil 25 vorgesehen, das in den Onlineangebots-Programmteil 14 integriert oder als eigenständiger Programmteil des Computerprogrammproduktes 8 vorgesehen ist.

Ferner kann, wie in Figur 1 dargestellt, ein Programmteil für künstliche Intelligenz (KI) 26 vorgesehen sein, das sowohl mit dem Vorauswahl-Programmteil 22 als auch mit dem Onlineangebots-Programmteil 14 beziehungsweise dem Abschluss-Programmteil 15 verbunden ist.

Das Benutzerendgerät 6 kann durch jegliche Computereinheit, wie beispielsweise einen Desktop-, Laptop-, Tablet-Computer oder ein Smartphone gebildet und für den Benutzer B mit einer beliebigen Eingabeschnittstelle, wie eine Computermouse, eine Tastatur oder einen berührungsempfindlichen Bildschirm ausgestattet sein. Vorzugsweise wird, wie dargestellt, ein Benutzerendgerät 6 mit einem berührungsempfindlichen Bildschirm 28, wie ein Tabletcomputer oder ein Smartphone verwendet, das eine Wischgesteneingabe mit oder ohne Bildschirmberührung ermöglicht.

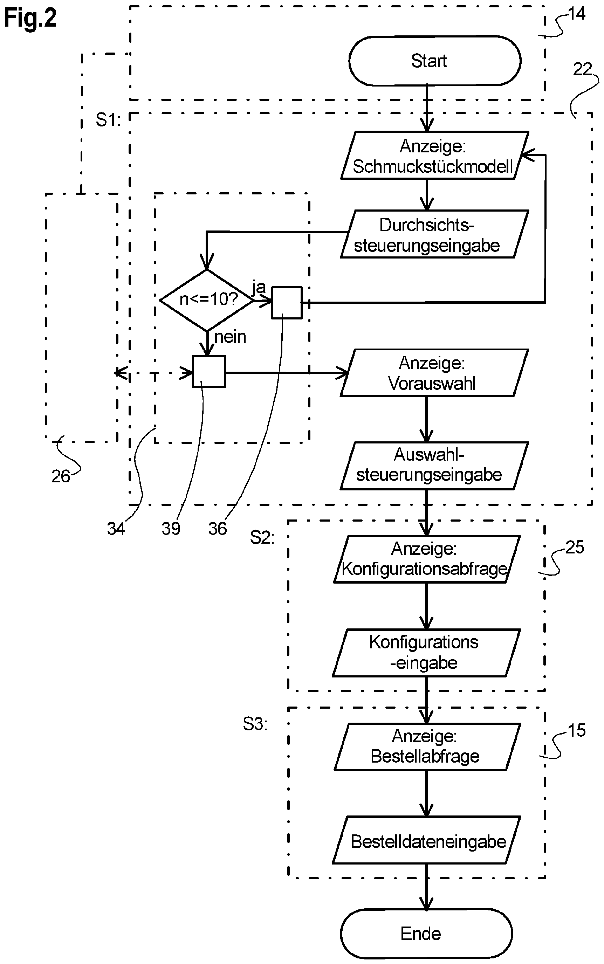

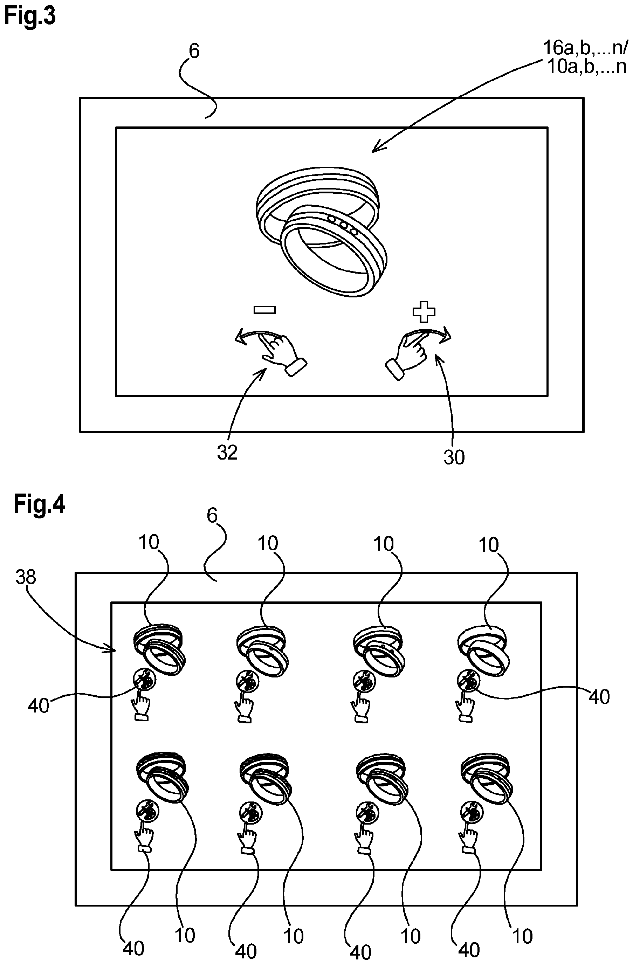

Das anhand des Schmuckkonfigurationssystems 2 durchgeführte Verfahren zur Konfiguration eines Schmuckstückmodells 10 wird nachfolgend anhand des Ablaufdiagramms nach Figur 2 sowie anhand der Anzeigen am Benutzerendgerät 6 gemäß der Figuren 3 bis 6 beschrieben:
Der Benutzer B, der die betreffende Onlineangebots-Website W aufgerufen hat und hierzu das Benutzerendgerät 6 gemäß Figure 1 mit dem Onlineangebots-Programmteil 14 verbunden hat, kann bedarfsweise die am berührungsempfindlichen Bildschirm 28 angezeigte virtuelle Schaltfläche 24 betätigen, um aus dem Onlineshop heraus das Vorauswahlprogrammteil 22 nach Figur 2 zu starten.

In diesem Vorauswahlprogrammteil 22 wird in einem ersten Schritt S1, wie in Figur 3 dargestellt, eine Ansicht 16a eines ersten Schmuckstückmodells 10a angezeigt. Wie aus Figur 3 zu entnehmen ist, werden dabei zusammen mit der Ansicht 16a zwei Optionen für eine Durchsichtsteuerungseingabe ausgegeben. Hierbei wird eine erste Eingabeoption 30, die einer positiven Wertung entspricht und hierzu beispielhaft mit einem Pluszeichen gekennzeichnet ist, als virtuelle Bedienfläche angezeigt. Zudem ist eine zweite Eingabeoption 32, die einer negativen Wertung entspricht und hierzu beispielhaft mit einem Minuszeichen gekennzeichnet ist, als virtuelle Bedienfläche angezeigt.

Die Eingabeoptionen 30, 32 sind hierbei beispielhaft als Wischgesteneingaben symbolisiert, die in entgegengesetzte Richtungen auszuführen sind. Alternativ oder zusätzlich zur Eingabe mittels einer solchen den berührungsempfindlichen Bildschirm 28 berührenden oder berührungslosen Gestensteuerung können die Bedienflächen der beiden Eingabeoptionen 30, 32 auch mittels einer Computermouse oder mittels einer Tastatur betätigt werden.

Sobald der Benutzer B durch Betätigung einer der beiden Eingabeoptionen 30, 32 seine Durchsichtsteuerungseingabe ausführt und dadurch das aktuell angezeigte Schmuckstückmodell 10a bewertet, wird diese Wertung erkannt und an einen Steuerungsteil 34 des Vorauswahlprogrammteils 22 weitergeleitet. Der Steuerungsteil 34 wertet die Durchsichtsteuerungseingabe aus und veranlasst die Wiedergabe einer zweiten Ansicht 16b eines zweiten Schmuckstückmodells 10b am Benutzerendgerät 6. Zu diesem kann der Benutzer B dann wiederum eine der beiden Eingabeoptionen 30, 32 mit seiner Durchsichtsteuerungseingabe auswählen, um auch das zweite Schmuckstückmodell 10b zu bewerten. Dieser Vorgang wird mit immer neuen Ansichten 16a,b,...n mehrmals wiederholt.

Die die Reihenfolge der verwendeten Schmuckstückmodelle 10a,b,...n beziehungsweise der zu diesen angezeigten Ansichten 16a,b,...n sind hierbei vorab festgelegt, wie beispielsweise durch eine vordefinierte feste Reihenfolge oder durch einen vorgegebenen Algorithmus nach dem die anzuzeigenden Schmuckstückmodelle 10a,b,...n nacheinander in Abhängigkeit der jeweiligen Durchsichtsteuerungseingaben des Benutzers B ausgewählt werden. Entsprechende Auswahldaten 36 sind hierzu, wie in Figur 2 dargestellt, im Steuerungsteil 34 des Vorauswahl-Programmteils 22 hinterlegt.

Sofern bei diesem Vorgang wenigstens eine positive Wertung durch entsprechende Durchsichtsteuerungseingabe über die erste Eingabeoption 30 an das Steuerungsteil 34 übergeben wird, erstellt der Steuerungsteil 34 des Vorauswahl-Programmteils 22 nach einer begrenzten Anzahl n an erfolgten Durchsichtsteuerungseingaben in Abhängigkeit der entsprechenden Bewertungen, gemäß Figur 2, eine Vorauswahl 38 an mehreren Schmuckstückmodellen 10, die dem Benutzer B nun für die Auswahlsteuerungseingabe angezeigt werden. Beispielsweise kann hierbei die Anzahl n der erforderlichen Durchsichtsteuerungseingaben auf maximal 25, vorzugsweise zehn, einschließlich wenigstens einer positiven Wertung, festgelegt sein, um eine schnelle Durchführung des Schmuckauswahl/-konfigurationsverfahrens zu gewährleisten. Ferner kann zur möglichst einfachen und schnellen Durchführung des Schmuckauswahl/-konfigurationsverfahrens auch die Zahl der innerhalb der Vorauswahl 38 angezeigten Schmuckstückmodelle 10 begrenzt sein, wie beispielsweise auf maximal acht.

Die Vorauswahl 38 wird dabei nach Vorauswahlkriterien 39 zusammengestellt, die ebenfalls am Steuerungsteil 34 hinterlegt sind. Insbesondere erfolgt die Zusammenstellung der Vorauswahl 38 beispielsweise in Abhängigkeit von Merkmalen, durch die die im ersten Schritt angezeigten und bewerteten Schmuckstückmodelle 10 charakterisiert sind, wie Farbe, Breite und Steinbesatz. Die betreffenden Vorauswahlkriterien 39 können dabei für die auf den jeweiligen Benutzer individuell zugeschnittene Zusammenstellung der Vorauswahl 38 unterschiedlich gewertet werden. Darüber hinaus kann die Vorauswahl 38 in Abhängigkeit von Informationen über das verwendete Benutzerendgerät 6 zusammengestellt werden, wie insbesondere über eine hieraus abgeleitete, voraussichtlich relevante Preisspanne. Hierzu kann beispielsweise anhand der IP-Adresse des Endgerätes 6 oder anhand des vom Webbrowser des Benutzerendgerätes 6 an die EDV-Einheit 4 übertragenen User-Agents eine Region in der sich das Benutzerendgerät 6 befindet, ein Internetprovider und/oder die Art beziehungsweise der Hersteller des Benutzerendgerätes 6 ermittelt werden. In Abhängigkeit von diesen Informationen wird dann abgeschätzt, für welche Preisspanne sich der jeweilige Benutzer B voraussichtlich interessiert. Ferner kann auch die Reaktionszeit des Benutzers B mit der er im ersten Schritt S1 nach der Ausgabe jedes einzelnen Schmuckstückmodells 10a,b,...n jeweils die zugehörige Durchsichtsteuerungseingabe vornimmt, für die Erstellung der Vorauswahl 38 herangezogen werden.

Wie aus Figur 2 zu entnehmen ist, kann das Computerprogrammprodukt 8 zudem ein Programmteil 26 für künstliche Intelligenz (KI) umfassen, das sowohl mit dem Steuerungsteil 34 als auch mit dem Onlineangebots-Programmteil 14 beziehungsweise mit dem Abschluss-Programmteil 15 in Verbindung steht und Daten austauscht. Anhand dieses KI-Programmteils 26 kann dabei beispielsweise die Wichtung der für die Zusammenstellung der Vorauswahl 38 herangezogenen Vorauswahlkriterien 39 verändert und optimiert werden. Hierzu wertet die KI beispielsweise die Veränderungen einer Erfolgsquote bezüglich erzielter oder nichterzielter Bestellungen aus, die sich bei den bereits vorgenommenen Veränderungen der Vorauswahlkriterien 39 ergeben haben. Auf diese Weise kann das KI-Programmteil 26 trainiert und die Zusammenstellung der Vorauswahl 38 mit zunehmender Zahl der durchgeführten Schmuckauswahl/- konfigurationsverfahren fortlaufend optimiert werden.

Wie aus Figur 4 zu entnehmen ist, wird am Benutzerendgerät 6 zu jedem angezeigten Schmuckstückmodell 10 der Vorauswahl 38 zudem eine virtuelle Bedienfläche einer Auswahloption 40 ausgegeben. Über diese Auswahloptionen 40 kann vom Benutzer B nun eines der vorausgewählten und angezeigten Schmuckstückmodelle 10 durch eine entsprechende Auswahlsteuerungseingabe gemäß Figur 2 ausgewählt werden. Hierdurch wird nun in einem zweiten Schritt S2 des Schmuckauswahl/-konfigurationsverfahrens eine Konfigurationsabfrage des Konfigurations-Programmteils 25 gestartet.

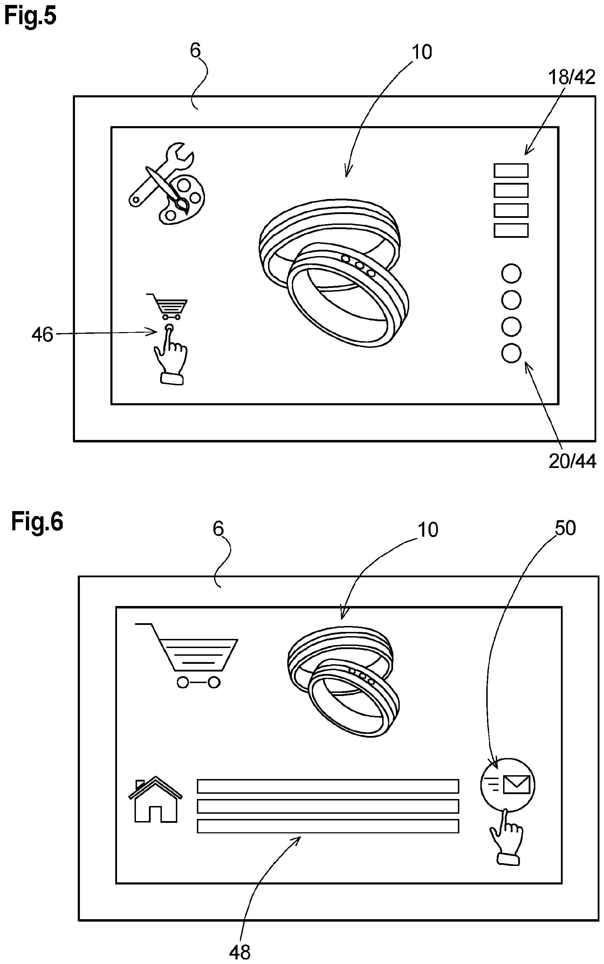

Bei dieser Konfigurationsabfrage wird am Benutzerendgerät 6 gemäß Figur 5 die konfigurierbaren Merkmale des ausgewählten Schmuckstückmodells 10 angezeigt. Diese bestehen dabei beispielsweise aus der wenigstens einen auswählbaren Variante 18 des jeweiligen Schmuckstückmodells 10, wie beispielsweise hinsichtlich der Farbe, der Größe und/oder des Designs. Alternativ oder zusätzlich hierzu können die konfigurierbaren Merkmale auch das wenigstens eine optionale Ausstattungsmerkmal 20 des ausgewählten Schmuckstückmodells 10 aufweisen, wie beispielsweise hinsichtlich eines verwendeten Materials und/oder eines Steinbesatzes. Die Auswahl erfolgt dabei beispielhaft durch Markieren oder Auswählen von virtuellen Bedienfeldern 42 und 44, die die auswählbaren Varianten 18 und/oder Ausstattungsmerkmale 20 textlich oder bildlich wiedergeben.

Alternativ oder zusätzlich hierzu kann auch eine Eingabemaske vorgesehen sein, über die die gewünschten Varianten 18 oder Ausstattungsmerkmale 20 textlich eingegeben werden.

Wie aus Figur 5 ferner zu entnehmen ist, wird bei der Konfigurationsabfrage am Benutzerendgerät 6 zudem eine virtuelle Bedienfläche für eine Bestellauswahlbestätigung 46 ausgegeben, die beispielsweise durch einen Einkaufswagen symbolisiert ist. Über diese Bestellauswahlbestätigung 46 kann die vom Benutzer B vorgenommene Konfiguration des ausgewählten Schmuckstückmodells 10 bestätigt und die Konfigurationseingabe gemäß Figur 2 somit abgeschlossen werden.

Daraufhin wird in einem dritten Schritt S3 des Schmuckauswahl/- konfigurationsverfahrens das Abschluss-Programmteils 15gestartet und eine Bestellabfrage als Abschlussoption angezeigt. Hierzu kann, wie in Figur 6 dargestellt, zunächst eine Eingabemaske 48 am Benutzerendgerät 6 ausgegeben werden, über die alle für die Bestellung erforderlichen Daten, wie insbesondere Lieferanschrift, Rechnungsanschrift, Zahlungsinformationen eingegeben werden können. Sobald alle für den Bestellvorgang notwendigen Angaben eingegeben sind, kann die Bestellung dann über eine am Benutzerendgerät 6 ausgegebene virtuelle Bedienfläche zur Bestellbestätigung 50 betätigt werden. Hierdurch wird der Bestellvorgang im dritten Schritt S3 abgeschlossen und das Schmuckauswahl/-konfigurationsverfahren beendet.

Alternativ hierzu kann der Bestellvorgang im dritten Schritt S3 auch über das Onlineangebots-Programmteil 14 erfolgen. Hierzu wird nach Betätigung der virtuellen Bedienfläche der Bestellauswahlbestätigung 46 eine entsprechende Seite des Onlineangebots-Programmteils 14 geöffnet, in dem dann der Bestellvorgang durchgeführt wird, wie beispielsweise durch Kauf in einem Onlineshop oder durch Kontaktierung eines Fachverkäufers, wie beispielsweise eines Juweliers. Auf diese Weise können gegebenenfalls bestellungsrelevante Daten des Benutzers B, die vorab bereits hinterlegt wurden, für den Bestellvorgang beziehungsweise zur Vorausfüllung einer entsprechenden Eingabemaske oder zur Kontaktherstellung verwendet werden. Als eine weitere alternative Abschlussoption des dritten Schrittes S3 kann ferner die Speicherung der bisherigen Auswahl beziehungsweise Konfiguration angeboten werden, um die entsprechenden Daten beispielsweise für einen späteren Bestellvorgang zu sichern.

In jedem Fall wird der Vorgang zur Auswahl, Konfiguration und Bestellung eines Schmuckstückmodells 10 durch das beschriebene Schmuckauswahl/- konfigurationsverfahren für den Benutzer B erheblich verkürzt und vereinfacht.

Es wird darauf hingewiesen, dass alle oben beschriebenen Elemente und Merkmale der verschiedenen Ausführungsformen des erfindungsgemäßen Gegenstandes untereinander austauschbar beziehungsweise kombinierbar sind, sofern ein Austausch oder eine Kombination derselben aus technischen Gründen nicht ausgeschlossen ist.

## Patentansprüche

1. Verfahren zur Schmuckauswahl und -konfiguration, insbesondere zur Auswahl und Konfiguration von Trau- beziehungsweise Paarringen aus einem Onlineangebot (12),
bei dem in einem ersten Schritt (S1) Ansichten (16) einer Mehrzahl von Schmuckstückmodellen (10) des Onlineangebots (12), die an einer EDV-Einheit (4) hinterlegt sind, an einem über ein Netzwerk (N) mit der EDV-Einheit (4) verbundenen Benutzerendgerät (6) in Abhängigkeit von detektierten Durchsichtsteuerungseingaben eines Benutzers (B) einzeln oder in Gruppen nacheinander angezeigt werden und durch eine Auswahlsteuerungseingabe des Benutzers (B) auswählbar sind,
in einem zweiten Schritt (S2) nach erfolgter Auswahlsteuerungseingabe eine Konfigurationsabfrage gestartet wird, bei der in Abhängigkeit des ausgewählten Schmuckstückmodells (10) auswählbare Varianten (18) und/oder optionale Ausstattungsmerkmale (20) ausgegeben werden und durch wenigstens eine Konfigurationseingabe auswählbar sind, und
in einem dritten Schritt (S3) nach Abschluss der Konfigurationsabfrage wenigstens eine Abschlussoption zur Einleitung eines Bestellvorganges ausgegeben wird,
**dadurch gekennzeichnet, dass** im ersten Schritt (S1) für die angezeigten Schmuckstückmodelle (10) des Onlineangebots (12) jeweils zwei unterschiedliche Eingabeoptionen (30, 32) für die Durchsichtsteuerungseingabe angezeigt werden, wobei hinsichtlich des jeweils aktuell angezeigten Schmuckstückmodells (10) eine erste Eingabeoption (30) einer positiven Wertung entspricht und eine zweite Eingabeoption (32) einer negativen Wertung entspricht, und nach einer vorbestimmten Anzahl an erfolgten Durchsichtsteuerungseingaben durch den Benutzer (B) in Abhängigkeit von dessen Wertung der angezeigten Schmuckstückmodelle (10a,b,...n) eine Vorauswahl (38) an mehreren Schmuckstückmodellen (10a,b,...n) ermittelt und angezeigt wird, von denen wenigstens eines durch die Auswahlsteuerungseingabe des Benutzers (B) für die Konfigurationsabfrage auswählbar ist.

2. Schmuckauswahl/-konfigurationsverfahren nach Anspruch 1, **dadurch gekennzeichnet, dass** die erste Eingabeoption (30) eine Wischgesteneingabe in eine erste Richtung und die zweite Eingabeoption (32) eine Wischgesteneingabe in eine zur ersten Richtung entgegengesetzte zweite Richtung ist.

3. Schmuckauswahl/-konfigurationsverfahren nach Anspruch 1 oder 2, **dadurch gekennzeichnet, dass** die Schmuckstückmodelle (10a,b,...n), die im ersten Schritt (S1) angezeigt werden, in einer vorgegebenen Reihenfolge aus dem in der EDV-Einheit (6) hinterlegten Onlineangebot (12) ausgewählt werden.

4. Schmuckauswahl/-konfigurationsverfahren nach einem der Ansprüche 1 bis 3, **dadurch gekennzeichnet, dass** im ersten Schritt (S1) die Vorauswahl (38) nach 25, vorzugsweise zehn Durchsichtsteuerungseingaben ermittelt und ausgegeben wird.

5. Schmuckauswahl/-konfigurationsverfahren nach einem der Ansprüche 1 bis 4, **dadurch gekennzeichnet, dass** die Vorauswahl (38) in Abhängigkeit von wenigstens einer festgestellten Durchsichtsteuerungseingabe ermittelt und ausgegeben wird, die einer positiven Wertung entspricht.

6. Schmuckauswahl/-konfigurationsverfahren nach einem der Ansprüche 1 bis 5, **dadurch gekennzeichnet, dass** die Vorauswahl (38) maximal acht Schmuckstückmodelle (10) umfasst.

7. Schmuckauswahl/-konfigurationsverfahren nach einem der Ansprüche 1 bis 6, **dadurch gekennzeichnet, dass** die Vorauswahl (38) in Abhängigkeit von Vorauswahlmerkmalen (38) der im ersten Schritt (S1) angezeigten und bewerteten Schmuckstückmodelle (10a,b,...n) ermittelt wird, die Farbe, Breite und Steinbesatz umfassen.

8. Schmuckauswahl/-konfigurationsverfahren nach einem der Ansprüche 1 bis 7, **dadurch gekennzeichnet, dass** die Vorauswahl (38) in Abhängigkeit von Informationen über das verwendete Benutzerendgerät (6) und eine daraus abgeleitete Preisspanne ermittelt wird.

9. Schmuckauswahl/-konfigurationsverfahren nach einem der Ansprüche 1 bis 8, **dadurch gekennzeichnet, dass** die Vorauswahl (38) in Abhängigkeit von Reaktionszeiten des Benutzers (B) bei den detektierten Durchsichtsteuerungseingaben ermittelt wird.

10. Schmuckauswahl/-konfigurationsverfahren nach einem der Ansprüche 7 bis 9, **dadurch gekennzeichnet, dass** die Vorauswahlkriterien (39) in Abhängigkeit derer die Vorauswahl (38) ermittelt wird, eine veränderbare Wichtung aufweisen und mittels künstlicher Intelligenz einstellbar sind.

11. Schmuckauswahl/-konfigurationsverfahren nach einem der Ansprüche 1 bis 10, **dadurch gekennzeichnet, dass** im dritten Schritt (S3) die wenigstens eine Abschlussoption durch Öffnen einer Onlineangebots-Website (W) zur Verfügung gestellt wird.

12. Computerprogrammprodukt zum Aufbau einer bidirektionalen Verbindung zwischen der EDV-Einheit und dem Benutzerendgerät sowie zur Durchführung des Verfahrens nach einem der Ansprüche 1 bis 11, das auf der EDV-Einheit gespeichert und ausführbar ist, **dadurch gekennzeichnet, dass** ein VorauswahlProgrammteil (22) zur Ermittlung und Ausgabe der Vorauswahl (38) der Schmuckstückmodelle (10) vorgesehen ist und das Vorauswahl-Programmteil (22) vom Benutzer (B) aus einer Onlineangebots-Website (W) heraus aktivierbar ist.

13. Computerprogrammprodukt nach Anspruch 12, **dadurch gekennzeichnet, dass** für die Aktivierung des Vorauswahl-Programmteils (22) aus der Onlineangebots-Website (W) heraus eine in diesem angezeigte, virtuelle Schaltfläche (24) programmiert ist.

14. Computerprogrammprodukt nach Anspruch 12 oder 13, **dadurch gekennzeichnet, dass** der Bestellvorgang über ein Onlineangebots-Programmteil (14) ausführbar ist.

15. Computerprogrammprodukt nach Anspruch 14, **dadurch gekennzeichnet, dass** alle Ansichten (16) und auswählbaren Varianten (18) und/oder optionale Ausstattungsmerkmale (20) der Schmuckstückmodelle (10) über den Onlineangebots-Programmteil (14) an der EDV-Einheit (4) hinterlegbar und vom Vorauswahl-Programmteil (22) abrufbar sind.

16. Computerprogrammprodukt nach einem der Ansprüche 12 bis 15, **dadurch gekennzeichnet, dass** ein KI-Programmteil (26) vorgesehen ist, mittels dem auf Basis früher angezeigter Vorauswahlen (38) und in Abhängigkeit der für diese eingeleiteten oder nicht eingeleiteten Bestellungen die Wichtung von Vorauswahlkriterien (39) veränderbar ist, in Abhängigkeit derer zukünftige Vorauswahlen (38) ermittelt werden.

17. Schmuckauswahlsystem zur Durchführung des Verfahrens nach einem der Ansprüche 1 bis 11 mit einer EDV-Einheit und einem mit dieser bidirektional verbindbaren Benutzerendgerät, **dadurch gekennzeichnet, dass** das Benutzerendgerät (6) einen berührungsempfindlichen Bildschirm (28) aufweist, an dem die Durchsichtsteuerungseingaben als Wischgesteneingabe ausführbar sind.
